# EUROPÄISCHE PATENTSCHRIFT

(11) **EP 3 815 875 B1**
(45) Veröffentlichungstag und Bekanntmachung des Hinweises auf die Patenterteilung: **09.03.2022**
(21) Anmeldenummer: 20170945.8
(22) Anmeldetag: 22.04.2020
(51) Int. Cl.: B29C 48/25, B29C 48/40, B29C 48/96, F16D 1/10, F16D 9/06

(54) **DOPPELSCHNECKENEXTRUDER MIT INTEGRIERTEN SICHERHEITSKUPPLUNGEN**
TWIN SCREW EXTRUDER WITH INTEGRATED SAFETY COUPLINGS
EXTRUDEUSE À DOUBLE VIS POURVUE D'ACCOUPLEMENTS DE SÉCURITÉ INTÉGRÉS

(30) Priorität: 30.10.2019 DE 202019106047 U
(43) Veröffentlichungstag der Anmeldung: 05.05.2021
(73) Patentinhaber: Veka AG, 48324 Sendenhorst (DE)
(72) Erfinder: Schuler, Werner, 48351 Everswinkel (DE)
(74) Vertreter: Tarvenkorn, Oliver

(56) Entgegenhaltungen:
- EP-A1- 1 829 665
- EP-A1- 3 378 624
- WO-A1-2016/022114
- DE-U1-202014 102 449
- JP-A- 2016 159 610

## Beschreibung

Die Erfindung bezieht sich auf einen Doppelschneckenextruder mit integrierten Sicherheitskupplungen, mit den Merkmalen des Oberbegriffs des Anspruchs 1.

In der DE 20 2014 102 449 U1 wird das Problem bei einem Doppelschneckenextruder beschrieben, das auch der Erfindung zugrunde liegt: In einem Doppelschneckenextruder wird ein insbesondere korn- beziehungsweise pulverförmiges Kunststoffmaterial, insbesondere PVC-Pulver, mittels zweier gegenläufig rotierender und ineinander kämmender Schneckenwellen durch einen beheizten Zylinder gefördert und dabei aufgeschmolzen. Bei einer Blockade einer oder beider wirkt das gesamte Drehmoment des Antriebs auf die beiden Getriebe, die der Drehzahlreduzierung und der Verteilung des Drehmoments auf zwei Abtriebswellen dienen. Hierbei kann eine Welle des Verteilgetriebes deutlich überlastet werden. Die aus einer Überlastung resultierende Beschädigungen des Getriebes sind sehr kostspielig und führen zu langem Produktionsstillstand. Bekannt hierzu ist eine Sicherheitskupplung, die die Wellenenden miteinander verbindet, wobei die Kupplung aus zwei Kupplungsbuchsen bestehen, die wiederum über Scherstifte, welche parallel zur Mittelachse der Welle verlaufen, verbunden sind. Da das Antriebsdrehmoment exakt in der Trennebene zwischen den Kupplungsbuchsen übertragen wird, kann die Scherspannung pro Scherstift gut berechnet werden.

Der Nachteil der bekannten Lösung liegt jedoch daran, dass die Sicherheitskupplungen aufgrund des erhöhten Platzbedarfs durch die am Außenumfang positionierten Scherelemente bei erhöhten Drehmomenten nicht nebeneinander angeordnet werden können. Der Achsabstand der beiden Abtriebswellen und der darüber anzutreibenden Extruderschnecken ist durch die Schneckengeometrie fest vorgegeben und kann nicht aus verfahrenstechnischen Gründen beliebig vergrößert werden, um die Sicherheitskupplungen nebeneinander anordnen zu können. Daher kann bei heute üblichen Drehmomenten nur eine versetzte Anordnung der Sicherheitskupplungen erfolgen. Um den axialen Versatz insbesondere bei parallel angeordneten Getriebeabtriebswellen auszugleichen, ist es erforderlich, Zwischenwellen vorzusehen und diese über weitere Kupplungen anzuschließen. Die zusätzlichen Kupplungen und die Ausgleichswellen erhöhen die Kosten und den Platzbedarf der Extrusionsanlage.

In der WO 00/109 486 A1 wird eine Lösung zur Begrenzung des zulässigen Drehmoments bei einer Extruderschnecke, insbesondere bei einem Doppelschneckenextruder, vorgestellt. Dabei sind Zwischenwellen vorgesehen, die selbst als Scherelement ausgebildet sein sollen. Diese Lösung hat jedoch den Nachteil, dass immer noch die recht aufwendig zu fertigenden Zwischenwellen benötigt werden und dass bei der an einer Einschnürung in der Zwischenwelle gebildeten Sollbruchstelle mehrachsige Spannungszustände auftreten können, die nicht so präzise berechenbar sind wie bei einem Zylinder förmigen Scherelement, so dass auch das auslösende Drehmoment nicht hinreichend sicher bestimmbar ist.

Bei Doppelschneckenextruder besteht das generelle Problem, dass der Durchmesser der Extruderschneckenwellen, deren Achsabstand und das benötigte Nenndrehmoment der Getriebeabtriebswellen durch verfahrenstechnische Parameter aus der Extruderauslegung vorgegeben sind und nicht beliebig erweiterbar sind, um eine Sicherheitskupplung mit größerem Durchmesser hinzuzufügen.

Eine Sicherheitskupplung für einen Doppelschneckenextruder ist in der DE 10 2017 106 454 A1 beschrieben. Diese zylindrischen Sicherheitskupplungen bauen bereits sehr schlank, so dass auf Zwischenwellen am Übergang zum Getriebe verzichtet werden kann. In der zylindrischen Hülse muss eine Innenverzahnung eingebracht werden, um die Kupplungsbuchse auf das jeweilige Wellenende aufsetzen zu können, was fertigungstechnisch aufwendig ist.

Die Aufgabe der Erfindung besteht somit darin, einen Doppelschneckenextruder mit einer noch kostengünstigere Sicherungskupplung auszustatten.

Gemäß der vorliegenden Erfindung wird die genannte Aufgabe dadurch gelöst, dass die Kupplungsbuchsen jeweils direkt in die Wellenenden von GetriebeAbtriebswellen und Extruderschneckenwellen integriert sind. Das heißt, der endseitige Wellenabsatz ist zugleich so gestaltet, dass Scherelemente darin aufgenommen werden können, welche die Trennfuge zwischen den Wellen überbrücken und somit eine Drehmomentübertragung über die Scherelemente erlauben.

Eine wesentliche Vereinfachung und Kostenersparnis wird dadurch erzielt, dass nicht nur die Innenverzahnung von Kupplungsbuchsen entfällt, sondern auch die Außenverzahnung aller vier Wellenenden.

Damit ist neben dem monetären Aspekt der weitere, sehr wesentliche Vorteil verbunden, dass am Außenumfang der Wellenenden keine Kerben mehr eingebracht werden und dass bei gegebenem Wellen-Achsabstand ein größerer Durchmesser mit Vollmaterial zur Verfügung steht. Das die Kupplungsbuchse ausbildende Wellenende ist hinsichtlich des eingesetzten Werkstoffs vollkommen homogen zum Rest der Welle, so dass allein die nachträglich einzusetzenden Stiftelemente davon abweichen. Auch die Härtung der Wellen kann durchgängig bis zum Wellenende vorgenommen werden.

Mit dem Entfall separater Kupplungsbuchsen ergibt sich eine größere statische wie dynamische Festigkeit. Zudem kann die Auslegung noch präziser erfolgen, weil die kerbspannungsfreien und hinsichtlich des Werkstoffs homogenen Wellenenden eine sehr gute rechnerische Auslegung erlauben, die mit geringer Streuung durch in der Praxis tatsächlich messbare Werten bestätigt wird.

Die Werkstoffauswahl für die Wellen, insbesondere für die Extruderschnecken, ist in der Praxis jedoch oft beschränkt. Für die Auslegung der Scherstifte in der Sicherheitskupplung ist ein harter Werkstoff des Wellenabsatzes, der die Scherstifte aufnimmt, vorteilhaft, da hierdurch ein zu starkes plastisches Aufweiten der Bohrungen vermieden wird. Allerdings wird bei der Wahl eines sehr harten Werkstoffs bzw. durch eine die Härte erhöhende Wärmebehandlung die Fertigung der Schneckengeometrie zum einen schwieriger und die Sprödbruchgefahr der Schnecken steigt, so dass sich ein Zielkonflikt ergibt.

Um eine Sicherheitskupplung unabhängig von einer gegebenen Werkstoffauswahl bzw. den sonstigen Werkstoffeigenschaften bei den Wellenenden auslegen zu können, sieht eine bevorzugte Ausführungsform ein Zwischenelement vor.

Durch das wenigstens eine eingefügte Zwischenelement je Wellenstrang ist der Vorteil gegeben, innerhalb des gegebenen Achsabstandes der Wellen eine Sicherheitskupplung pro Wellenstrang integrieren zu können, ohne Zwischenwellen oder dergleichen vorsehen zu müssen. Zugleich kann der Querschnitt sowohl der Wellenenden wie auch des Zwischenelements voll ausgenutzt werden, indem der jeweilige Durchmesser des Zwischenelements - bei unrunden Formen: dessen Umkreis - bis maximal dem Achsabstand entsprechen kann. Es ist lediglich ein minimaler Luftspalt zwischen den Wellen erforderlich, um eine Berührung auszuschließen. Der Durchmesser kann das 0,5fache bis 1,0fache des Achsabstandes A betragen, insbesondere das 0,8fache bis 1,0fache.

Bevorzugt werden sowohl zur Befestigung der Zwischenelemente wie auch für die Auslösung der Sicherheitskupplung jeweils Zylinderstifte verwendet. Dabei besitzen die beiden Gruppen von Zylinderstiften zwar unterschiedliche Längen, aber vorzugsweise den gleichen Durchmesser, so dass gleichartige Bohrungen hergestellt werden können.

Eine Einteilung der Stiftelemente in zwei Gruppen zu je drei Stiftelementen ist vorteilhaft, weil für die sichere Drehmomentübertragung und die rechnerische Auslegung der Sicherheitskupplungen wenigstens drei Stiftelemente zu bevorzugen sind. In dem so vorgegebenen Lochbild mit drei Bohrungen können dann jeweils auch bei beengten Platzverhältnissen noch drei weitere Bohrungen in die Zwischenräume eingefügt werden, um das Zwischenelement mit dem zugehörigen Wellenende zu verstiften. Das Zwischenelement ist bei dieser Anordnung mit einem der Wellenenden, vorzugsweise mit dem Wellenende der Extruderschnecke, mit einer höheren, insbesondere mit der doppelten Anzahl von Stiftelementen, im Vergleich zur Anzahl der Scherelemente, gekoppelt. Dadurch ist sichergestellt, dass ein möglicher Bruch der Scherstifte bei der Auslösung der Sicherheitskupplung nur in der Trennebene auf der jeweils anderen Seite des Zwischenelements auftreten wird. In der dortigen Trennebene sind bei dieser Ausführungsform nur drei Scherelemente vorhanden, die die Trennebene zu dem anderen Wellenende hin überbrücken. Diese werden auf das zu übertragende Drehmoment ausgelegt.

Grundsätzlich möglich ist auch, die Trennebene zwischen dem Wellenende und dem Zwischenelement völlig losgelöst von der für die Auslösung der Kupplung vorgesehenen Trennebene auf der anderen Seite des Zwischenelements auszulegen und die Scherelemente nicht durch das Zwischenelement hindurch zu führen und nicht in beide Wellenenden eingreifen zu lassen. Es muss lediglich sichergestellt sein, dass das in der ersten Trennebene zwischen einem der Wellenenden und dem Zwischenelement übertragbare Drehmoment deutlich größer ist als in der anderen Trennebene, so dass es nur die eine Trennebene gibt, in der die nach der Erfindung gebildete Sicherheitskupplung durch Bruch der Scherstifte auslöst, sobald ein sicherheitsrelevantes Drehmoment überschritten wird.

In einer weiteren Ausführungsform ist vorgesehen, beide Wellenenden jeweils mit einem Zwischenelement über eine erste Gruppe von Stiftelementen zu verbinden und zusätzlich die zweite Gruppe von Stiftelementen, die als Scherelemente dienen, noch länger auszuführen, damit diese von Bohrungen in dem einen Wellenende durch beide Zwischenelemente hindurch bis in das jeweils andere Wellenende reichen.

Weitere mögliche vorteilhafte Ausgestaltungen der Erfindung sehen vor, in der Trennebene zur Aufnahme der Scherelemente ein Adapterelement vorzusehen, das eine Ausnehmung mit einer Innenverzahnung aufweist, insbesondere in Form einer Buchse mit einer Sackverzahnung. Dieses wird auf ein verzahntes Ende der Abtriebs- oder der Extruderschneckenwelle aufgesetzt. Die aus dem Zwischenelement austretenden Scherstifte greifen in stirnseitig in dem Adapterelement eingebrachte Bohrungen ein. Diese Ausführungsform bietet sich insbesondere dort an, wo bereits mit einer Außenverzahnung versehene Wellenenden nachträglich mit einer Sicherheitskupplung ausgestattet werden sollen.

Das Zwischenelement ist vorzugsweise als zylindrische Schreibe ausgebildet, dessen axiale Länge wenigstens das 1,5fache des Stiftdurchmessers betragen sollte. Bei einer solchen Länge sind die Scherstifte gut in den Bohrungen geführt, so dass durch elastische Effekte oder Schiefstellungen der Scherstifte hervorgerufene Verfälschungen des rechnerischen Versagensdrehmoments, bei dem die Kupplung auslösen soll, vermieden werden. Vielmehr werden die Scherstifte in der Trennebene exakt achsparallel geführt und damit allein auf Schub belastet.

Im Zwischenelement können noch zusätzliche Gewindebohrungen vorgesehen sein, um das Zwischenelement leichter von dem Wellenende, mit dem es verstiftet ist, abziehen zu können.

Das gewünschte maximale Drehmoment, bei welchem die Sicherheitskupplung versagen soll, um Antrieb, Extruderschneckenwellen und insbesondere Getriebe zu schützen, ist durch die Scherelemente sehr präzise einstellbar, und zwar durch Variation folgender Parameter:
- Werkstoffauswahl und Werkstoffeigenschaften, z. B. infolge einer Wärmenachbehandlung;
- Durchmesser;
- Querschnittsform,
- Anzahl und
- Teilkreisdurchmesser.

Vorzugsweise sind die Scherelemente als glatte zylindrische Scherstiftelemente ausgebildet.

Über eine größere Anzahl von Scherelementen ist es möglich, ein hohes Drehmoment zu übertragen, ohne bei dem einzelnen Scherelement einen zu großen Durchmesser vorsehen zu müssen. Bevorzugt werden zwischen 2 und 8 Scherelemente vorgesehen, wodurch die zur Verfügung stehende Fläche an den Stirnseiten der Wellenenden gut genutzt ist.

Die Bohrungen für die Scherelemente auf den Stirnseiten sind vorzugsweise jeweils auf einem gemeinsamen Teilkreis angeordnet, können aber auch mit einem Winkelversatz auf mehreren Teilkreisen angeordnet sein. Damit wird eine exakt symmetrische Belastung erreicht, insbesondere dann, wenn die Bohrungen weiterhin vorzugsweise in einer gleichmäßigen Winkelteilung auf den Stirnseiten angeordnet sind.

Bei den Wellenenden temperierter Extruderschneckenwellen muss sich der Teilkreis ggf. um eine zentrale Temperiermittelbohrung herum erstrecken.

Die besonderen Vorteile der Erfindung ergeben sich bei einer parallelen Anordnung der Schneckenwelle, da dort der Achsabstand verfahrenstechnisch bedingt ist und der zur Verfügung stehende Bauraum für eine Sicherheitskupplung somit besonders limitiert ist. Aber auch bei konisch ausgebildeten Schnecken, deren Mittelachsen in einem Winkel von wenigen Grad zueinander angestellt sin, kann nach der Erfindung eine platzsparende und zugleich zuverlässig auslösende Sicherheitskupplung integriert werden.

Vorzugsweise entsprechen die Außendurchmesser der Wellenenden nahezu vollständig dem Achsabstand, nämlich dem 0,8fachen bis 1,0fachen Achsabstand. Es reicht ein minimaler seitlicher Spalt dazwischen aus, um eine Berührung der nebeneinander liegenden Wellenenden trotz eventuell auftretender Rundlauffehler oder Lagerspiels zu vermeiden.

Insbesondere entspricht der Durchmesser des Teilkreises der Bohrungen dem 0,5fachen bis 0,9fachen Außendurchmesser der Wellenenden.

Die Abstimmung des Teilkreises mit dem Bohrungsdurchmesser erfolgt so, dass die restliche radiale Wandstärke bei jeder Aufnahmebohrung für ein Scherelement in Abhängigkeit von der Größe ausreichend bemessen ist und typischerweise noch mindestens 3 mm bis 5 mm beträgt.

Innerhalb der Vorgaben durch die erforderliche radiale Mindestwandstärke wird der Teilkreis dann in der Regel so bestimmt, dass die Scherelemente möglichst weit außen angeordnet sind, um ein möglichst großes Drehmoment übertragen zu können.

Möglich ist aber auch, das übertragbare Drehmoment durch eine Verkleinerung des Teilkreises gezielt zu verringern. Dies kann dann der Fall sein, wenn auf vorgefertigte und somit im Durchmesser festgelegte Stiftelemente zurückgegriffen werden soll, so dass dann nach einer Grobjustierung des Auslösemoments der Sicherheitskupplung durch die Wahl der Anzahl und des Durchmesser der Stiftelemente eine Feinjustierung am einfachsten über die Variation des Teilkreises erfolgen kann.

In jedem Fall ist die außen verbleibende Wandstärke der zylindrischen Hülle ausreichend, um die Antriebsdrehmomente in den Stirnbereich der Wellenenden und darüber in die Scherelemente überzuleiten. Die Scherelemente werden sehr präzise nur in einer Trennebene zwischen den Kupplungsbuchsen, welche senkrecht zur Rotations- und Mittelachse der Abtriebswellen und der Extruderschnecke verläuft, und nur auf Schub, ohne Überlagerung durch Biegemomente, belastet. Durch präzise Positionierung der zugehörigen Bohrungen sowie durch Wahl von Passungen zwischen den Scherstiften und den Bohrungen wird eine praktisch spielfreie Verbindung hergestellt. Alle Scherelemente, von denen erfindungsgemäß wenigstens zwei vorgesehen sind, werden somit exakt gleichzeitig und gleichartig belastet.

Zusammengefasst ergibt sich ein Verfahren zur Auslegung einer Sicherheitskupplung bei einem Doppelschneckenextruder mit folgenden Schritten:
1) Das maximal über die Sicherheitskupplung zu übertragende Maximalmoment, also das Versagensdrehmoment, wird festgelegt.
2) Die radiale Breite der für die Anordnung von Bohrungen zur Verfügung stehenden Ringzone auf der Stirnseite der Extruderschneckenwelle wird wie folgt ermittelt:
   - Ermitteln der Differenz zwischen Wellenenden-Durchmesser und Öffnungsdurchmesser der Temperiermittelbohrung abzüglich der doppelten radialen Mindestwandstärke, die seitlich neben den Bohrungen für die Scherelemente erforderlich ist.
   - Die maximale radiale Breite der Ringzone wird als die Hälfte der so ermittelten Differenz definiert.
3) Aus einer Reihe von Durchmessern von zylindrischen Halbzeugen, die für die Herstellung der Scherelemente geeignet sind, wird ein Halbzeug ausgewählt, dessen Durchmesser gleich groß ist wie oder kleiner ist als die Breite der Ringzone.
4) Es wird unter Einbeziehung der Festigkeitswerte der Halbzeuge für die Scherelemente berechnet, ob mit diesem Scherelement-Durchmesser und bei einer Lastverteilung auf wenigstens zwei Scherelemente das Nenndrehmoment übertragbar ist und insbesondere, ob das Nenndrehmoment auch nicht zu stark überschritten wird.
5) Wenn das Brechmoment zu klein ist, bei dem die Scherelemente brechen und die Kupplung versagt, wird die Anzahl der Scherelemente erhöht und die Berechnung aus Schritt 4 wiederholt
6) Ist das Brechmoment zu groß, wird in Schritt 3 der nächstkleinere zur Verfügung stehende Durchmesser gewählt und die Berechnung aus Schritt 4 wiederholt.
7) Nach endgültiger Festlegung von Durchmesser und Anzahl der Scherelemente erfolgt eine Feinjustierung des Nenndrehmoments über den Teilkreisdurchmesser. Ergibt sich dabei, dass rechnerisch die Ringzone verlassen werden müsste, muss bei den Scherelementen nochmals ein kleinerer Durchmesser und eine erhöhte Anzahl festgelegt werden, so dass die Schritte 3 ff. zu wiederholen sind.

Bei einer bevorzugten Ausführungsform der Erfindung ist zudem vorgesehen, dass die Scherstiftelemente zumindest in einem Wellenenden axial festlegbar sind. Zusätzliche Formschlussmittel sind vorgesehen, um eine axiale Festlegung der Scherelemente zu erreichen. Der Formschluss kann beispielsweise durch wenigstens eine Nut am Scherelement gebildet sein, in die ein von der Außenseite des Wellenabsatzes eingebrachtes Sicherungselement eingreift. Hierzu kann beispielsweise ein Gewindestift, eine sogenannte Madenschraube, in eine Gewindebohrung in der Hülle eingesetzt werden, welche genau im Bereich der Nut des Scherelements endet.

Wenn nicht nur an einem Wellenende eine Sicherung vorgesehen ist, sondern wenn an beiden fluchtenden und miteinander gekoppelten Wellenenden zusätzliche Sicherungsmittel vorgesehen sind, dann sind die Scherelemente nicht nur gegen Herausfallen bei der Montage gesichert, sondern verbinden die Wellenenden nach der Montage auch axial formschlüssig miteinander. Hierdurch wird eine sogenannte Vorlaufsicherung gebildet, die die Extruderschnecke an die Abtriebswelle anhängt und verhindert, dass sich beim Anfahren des Extruders eine der Extruderschneckenwellen in der Extruderbohrung axial nach vorn bewegen kann.

Die Erfindung wird nachfolgend mit Bezug auf das in den Zeichnungen dargestellte Ausführungsbeispiel näher erläutert. Die Figuren zeigen:
- Figur 1: Teile eines Doppelschneckenextruders mit Sicherheitskupplungen gemäß einer ersten Ausführungsform in Explosionsdarstellung;
- Figur 2: Teile des Doppelschneckenextruders in Ansicht von oben;
- Figur 3: Teile eines Doppelschneckenextruders mit Sicherheitskupplungen gemäß einer zweiten Ausführungsform in Explosionsdarstellung;
- Figur 4: Teile des Doppelschneckenextruders gemäß Figur 3 in Ansicht von oben.
- Figur 5: Teile eines Doppelschneckenextruders mit Sicherheitskupplungen gemäß einer dritten Ausführungsform in Explosionsdarstellung;
- Figur 6: Teile eines Doppelschneckenextruders mit Sicherheitskupplungen gemäß einer vierten Ausführungsform in Explosionsdarstellung; und
- Figur 7: Teile eines Doppelschneckenextruders mit Sicherheitskupplungen gemäß einer fünften Ausführungsform in Explosionsdarstellung.

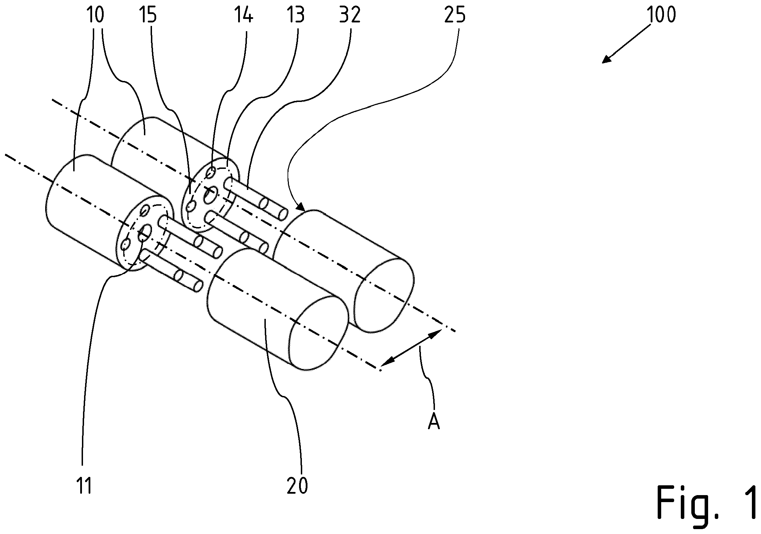

In Figur 1 sind Teile eines Doppelschneckenextruders 100 mit integrierten Sicherheitskupplungen dargestellt. Im hinteren, linken Bereich sind zwei Wellenenden 10 von Extruderschneckenwellen angeordnet, die in einem bestimmten Abstand A ihrer parallelen Mittelachsen zueinander angeordnet sind. Gegenüberliegend, rechts unten, sind weitere Wellenenden 20 erkennbar. Diese sind auf der Abtriebsseite eines Verteilergetriebes vorgesehen, durch welches die von einem Motor bereitgestellte Antriebsleistung gleichmäßig auf die beiden Wellen verteilt wird.

Zwischen den Wellenenden 10, 20 sind Sicherheitskupplungen ausgebildet. Jede der Sicherheitskupplungen umfasst neben den zusätzlich als Kupplungsbuchse dienenden Wellenenden 10, 20 noch zylindrische Scherelemente 32.

An einer Stirnseite 15 sind auf einem Teilkreis 13 mehrere Bohrungen 14 angeordnet, in die jeweils ein zylindrisches Scherelement 32 einsetzbar ist. Bei dem gezeigten Ausführungsbeispiel sind jeweils vier Bohrungen 14 und vier Scherelemente 32 je Sicherheitskupplung vorgesehen.

Am Wellenende 10 der Extruderschneckenwelle ist außerdem eine zentrale Ausnehmung 11 vorgesehen, die innerhalb der Anordnung von Bohrungen 14 auf dem Teilkreis 13 liegt. Es handelt sich um eine Bohrung, durch die ein Temperiermittel in eine Bohrung im Inneren der Extruderschneckenwelle eingefüllt werden kann. Die Öffnung der Bohrung wird durch einen Stopfen verschlossen.

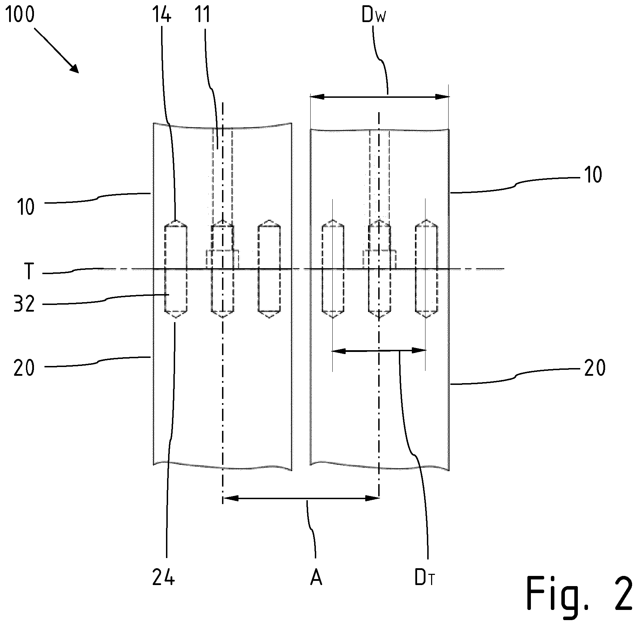

Figur 2 zeigt einen Teilausschnitt des montierten Doppelschneckenextruders 100 mit den beiden nebeneinander, auf gleicher axialer Position liegenden Sicherheitskupplungen in einer Ansicht von oben.

Alle Wellenenden 10, 20 sind mit gleichem Außendurchmesser ausgebildet, so dass sich ein versatzloser Übergang zwischen den Stirnseiten in der Trennebene T ergibt.

Der Teilkreisdurchmesser D_{T} ist so gewählt, dass sowohl radial nach innen, zu der Temperiermittelbohrung 11 im Zentrum hin, wie auch radial zum Außenumfang hin jeweils eine genügend große Wandstärke neben den Bohrungen 14 verbleibt.

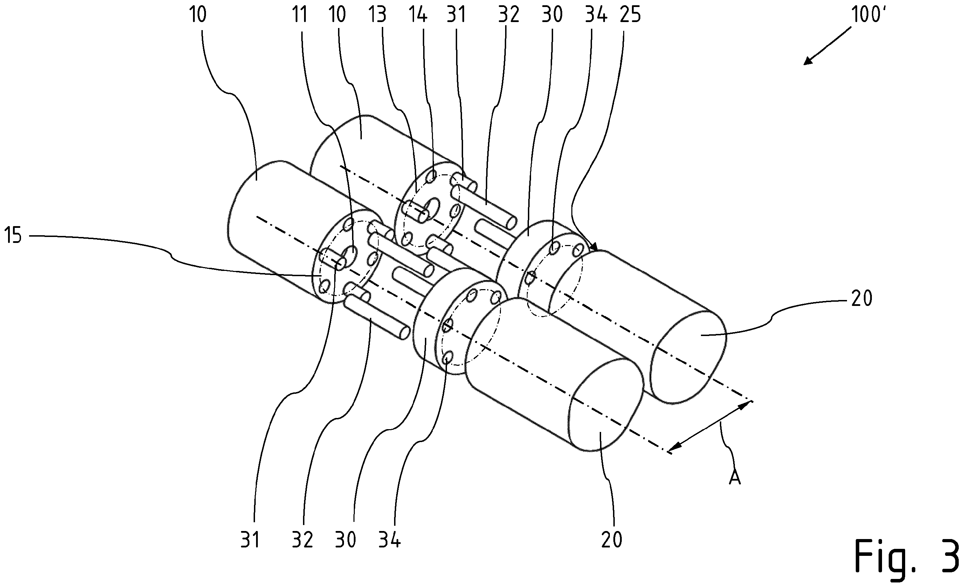

In Figur 3 sind, ähnlich wie in Figur 1, Teile eines Doppelschneckenextruders 100' mit Sicherheitskupplungen dargestellt. Im hinteren, linken Bereich sind wiederum zwei Wellenenden 10 von Extruderschneckenwellen angeordnet, die in einem bestimmten Abstand A ihrer Mittelachsen zueinander angeordnet sind. Gegenüberliegend, rechts unten, sind weitere Wellenenden 20 erkennbar. Diese sind auf der Abtriebsseite eines Verteilergetriebes vorgesehen, durch welches die von einem Motor bereitgestellte Antriebsleistung gleichmäßig auf die beiden Wellen verteilt wird.

Zwischen den Wellenenden 10, 20 sind jeweils Sicherheitskupplungen ausgebildet, die in den dargestellten Ausführungsbeispielen jeweils drei zylindrische Scherelemente 32 umfassen.

An einer Stirnseite 15 des Wellenendes 10 sind auf einem Teilkreis 13 mehrere Bohrungen 14 angeordnet. Am Wellenende 10 der Extruderschneckenwelle ist außerdem eine zentrale Ausnehmung 11 vorgesehen, die innerhalb der Anordnung von Bohrungen 14 auf dem Teilkreis 13 liegt. Es handelt sich bei der Ausnehmung 11 um eine Bohrung, durch die ein Temperiermittel ins Innere der Extruderschneckenwelle eingefüllt werden kann. Die Öffnung der Bohrung wird durch einen Stopfen verschlossen.

Auf dem gemeinsamen Teilkreis 13 sind jeweils drei kurze Zylinderstifte 31 in die Bohrungen 14 eingesetzt, welche der drehmomentensteifen Verbindung des Wellenendes 10 mit einem scheibenförmigen Zwischenelement 30 dienen. Davor ist eine zweite Gruppe von Stiftelementen 32 gezeigt, welche als Scherelemente dienen und in die verbleibenden drei Bohrungen 14 an der Stirnseite 15 eingesetzt werden.

Zwischen den Wellenenden 10 und den Wellenenden 20 ist jeweils ein Zwischenelement 30 eingefügt. Im dargestellten Ausführungsbeispiel handelt es sich um eine einfache zylindrische Scheibe, die den gleichen Durchmesser besitzt wie die Wellenenden 10, 20, jedoch andere Werkstoffeigenschaften besitzt oder aus einem anderen Werkstoff gebildet ist.

Das Zwischenelement 30 besitzt eine Reihe von Bohrungen 34, die mit dem gleichen Lochbild wie die Bohrungen 14 an der Stirnseite 15 am Wellenende 10 versehen sind. Nicht sichtbar sind hier die Bohrungen an der jeweiligen Stirnseite 25 der Wellenenden 20. Dort sind nur drei Bohrungen notwendig, um die langen Scherelemente 32 aufzunehmen, welche sich im montierten Zustand des Doppelschneckenextruders 100' von den Bohrungen 14 im Wellenende 10, durch die Bohrungen 34 im Zwischenelement 30 hindurch und bis in die entsprechenden Bohrungen im Wellenende 20 erstrecken.

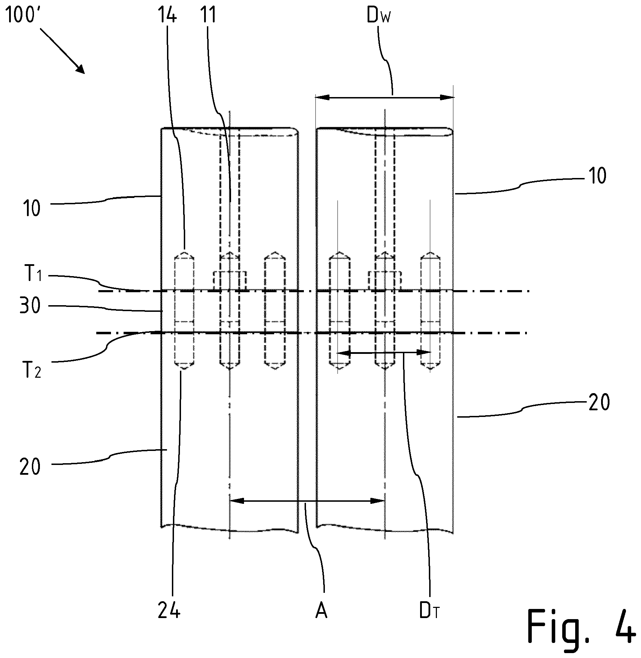

Figur 4 zeigt einen Teilausschnitt des montierten Doppelschneckenextruders 100' gemäß der in Figur 3 gezeigten Ausführungsform in Draufsicht. Alle Wellenenden 10, 20 und die Zwischenelemente 30 sind mit gleichem Außendurchmesser D_{w} ausgebildet, so dass sich in jedem Strang ein versatzloser Übergang über zwei Trennebenen T₁, T₂ hinweg ergibt. Der Teilkreisdurchmesser D_{T} ist so gewählt, dass sowohl radial nach innen, zu der Temperiermittelbohrung 11 im Zentrum, wie auch radial zum Außenumfang hin jeweils eine genügend große Wandstärke neben den Bohrungen 14 verbleibt.

Die für die rechnerische Auslegung der integrierten Sicherheitskupplung maßgebliche Trennebene ist diejenige, die allein von den langen Scherstiften 32 überbrückt wird, also in diesem Fall die Trennebene T₂. Nur die Scherstifte 32 erstrecken sich von den Bohrungen 14 im Wellenende 10 bis in die Bohrungen 24 im Wellenende 20.

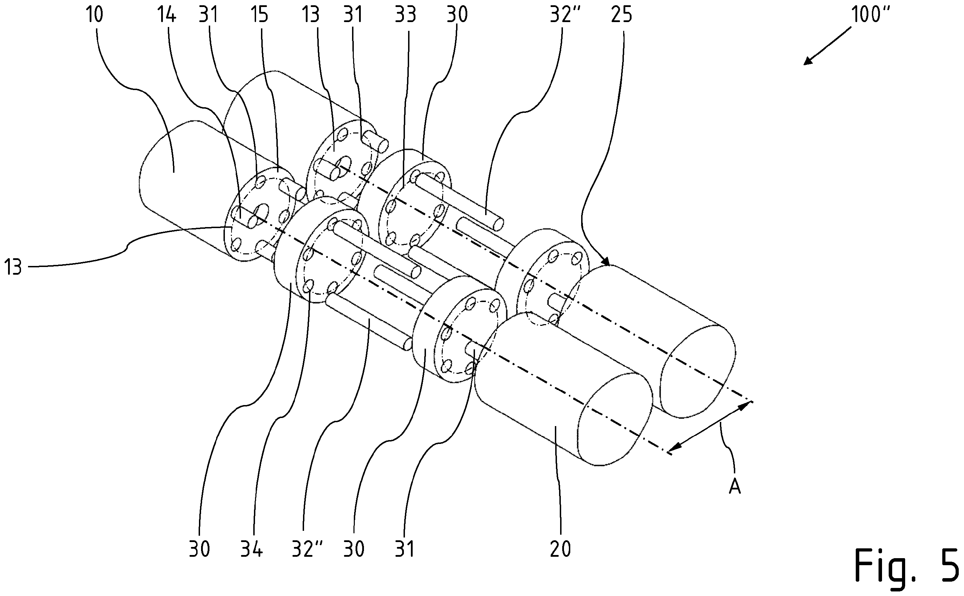

Eine weitere Ausgestaltung eines Doppelschneckenextruders 100" ist in Figur 5 gezeigt. Die Ausbildung der Wellenenden 10 mit den Bohrungen 14, den kurzen Stiftelementen 31 und dem Zwischenelement 30 ist identisch zu den zuvor beschriebenen Ausführungsformen. Abweichend bei dieser Ausführungsform ist hierbei am Wellenende 20 mit einer weiteren Zwischenscheibe 30 eine identische Konfiguration hergestellt wie auf der anderen Seite. Die Verbindung aller Wellenenden 10, 20 und Zwischenscheiben 30 erfolgt über jeweils drei Scherelemente 32", die noch länger ausgebildet sind als bei der vorigen Ausführungsform, damit alle Elemente10, 30, 20 miteinander verbunden werden können.

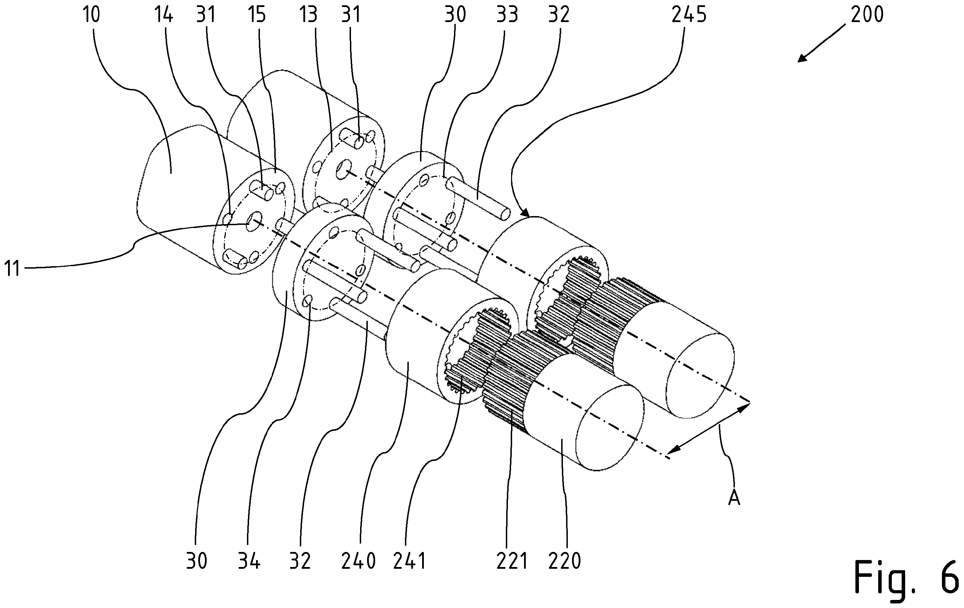

Figur 6 zeigt eine weitere Ausführungsform eines Doppelschneckenextruders 200. Die Ausbildung der Wellenenden 10 und des Zwischenelements 30 ist jeweils identisch zu den Ausführungsform nach den Figuren 3 bis 5. Unterschiedlich dazu ist die Ausbildung der Wellenenden 220 der Abtriebswellen. Diese besitzen jeweils eine Außenverzahnung 221. Neben dem Zwischenelement 30 ist ein Adapterelement 240 vorgesehen, das als Buchse ausgebildet ist und das in seinem Innenraum mit einer Innenverzahnung 241 ausgebildet ist, welche kompatibel zu der Außenverzahnung 221 der Abtriebswellenenden 220 ist. An der zu den Extruderschneckenwellen gewandten Stirnseite 245 des Adapterelements 240, das in Figur 6 nicht sichtbar ist, sind drei weitere Bohrungen vorgesehen, welche die langen Scherstifte 32 aufnehmen.

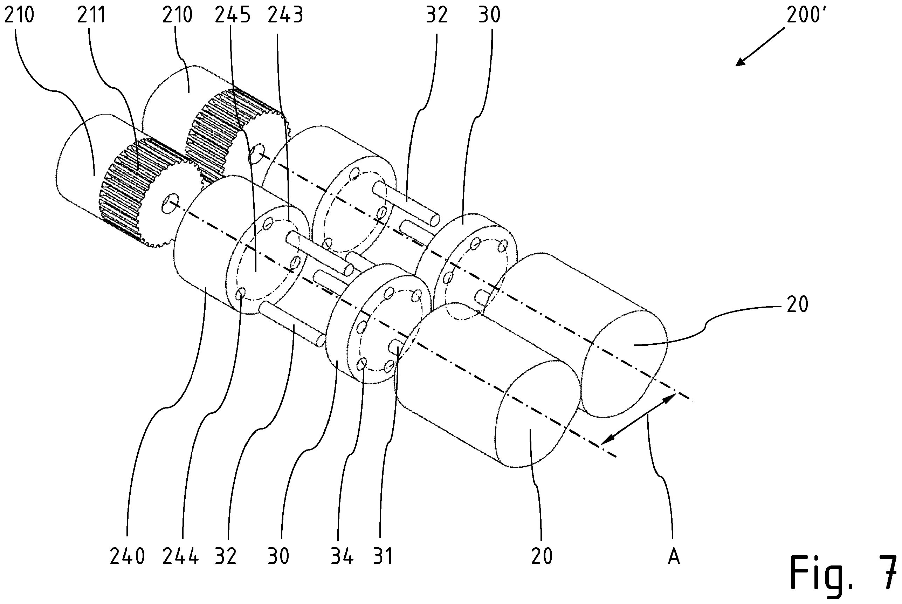

Bei dem in Figur 7 dargestellten Ausführungsbeispiel eines Doppelschneckenextruders 200' ist im Vergleich zu Fig. 6 die Lage des Adapterelementes 240 und des Zwischenelements 30 vertauscht. Hier ist vorgesehen, die Wellenenden 210 der Extruderschnecken mit einer Außenverzahnung 211 zu versehen. Darauf aufgesetzt ist das Adapterelement 240, das an seiner rückwärtigen Seite eine Ausnehmung mit einer Innenverzahnung besitzt, wie aus Figur 6 ersichtlich. An der Stirnseite 245 sind drei Bohrungen 244 auf einem Teilkreis 243 zur Aufnahme der langen Scherstifte 32 vorgesehen.

## Patentansprüche

1. Doppelschneckenextruder (100; 100'; 100"; 200; 200') mit integrierten Sicherheitskupplungen, wenigstens umfassend ein Paar von Extruderschneckenwellen mit je einem antriebsseitigen Wellenende (10; 210), und ein Getriebe mit zwei Abtriebswellen mit je einem Wellenende (20; 220),
wobei je eine Extruderschneckenwelle und eine Antriebswelle auf einer gemeinsamen Mittelachse fluchtend angeordnet sind;
**dadurch gekennzeichnet,**
- **dass** das Paar von Wellenenden (10; 210) der Extruderschneckenwellen und/oder das Paar von Wellenenden (20; 220) des Getriebes zylindrisch ausgebildet ist;
- **dass** auf den Stirnseiten (15) wenigstens eines Paars von Wellenenden (10, 20, 210, 220) mehrere zur Mittelachse parallele Bohrungen (14; 24) für wenigstens zwei Scherelemente (32; 32") vorgesehen sind, und
- die Wellenenden (10, 20) über die in die Bohrungen (14; 24) eingesetzten Scherelemente (32; 32"), welche wenigstens zwischen den Wellenenden (10, 210) der Extruderschneckenwellen und den Wellenenden (20, 220) des Getriebes ausgebildete Trennebene (T; T₁; T₂) überbrücken, drehmomentensteif miteinander gekoppelt sind.

2. Doppelschneckenextruder (100; 100'; 100"; 200; 200') nach Anspruch 1,
**dadurch gekennzeichnet, dass** die Scherstiftelemente (32; 32'; 32") als Zylinderstifte ausgebildet sind.

3. Doppelschneckenextruder (100'; 100"; 200; 200') nach Anspruch 2, **dadurch gekennzeichnet,**
- **dass** zwischen den Wellenenden (10, 20; 210, 220) der Extruderschnecken und der Antriebswellen jeweils wenigstens ein Zwischenelement (30) eingefügt ist, dessen Außendurchmesser nicht größer ist als der Achsabstand A zwischen den Abtriebswellenenden (20; 220) ist;
- **dass** das Zwischenelement (30) über eine erste Trennebene T₁ mit einem der axial benachbarten Wellenenden (10, 20; 210, 220) drehmomentensteif verbunden ist,
- **dass** die zylinderstiftförmigen Scherelemente (32; 32"), von dem wenigstens einen eingefügten Zwischenelement (30) ausgehend, wenigstens eine Trennebene T₂ zu dem anderen Wellenende (10, 20; 210, 220) überbrücken, und
- **dass** das in der Trennebene T₂ übertragbare Drehmoment kleiner ist als das in der Trennebene T₁ übertragbare Drehmoment.

4. Doppelschneckenextruder (100') nach Anspruch 3, **dadurch gekennzeichnet,**
- **dass** die Wellenenden (10, 20; 210, 220) und das Zwischenelement (30) jeweils wenigstens zwei deckungsgleiche Bohrungen (14; 24; 34) aufweisen und
- **dass** sich wenigstens ein Teil der Scherelemente (32') von Bohrungen (14; 24) in der Stirnseite (15; 25) des einen Wellenendes (10, 20) durch Bohrungen (34) im Zwischenelement (30) bis in Bohrungen (14; 24) im jeweils anderen Wellenende (10, 20) oder in wenigstens einem damit verbundenen weiteren Zwischenelement (30) oder einem Adapterelement (240) erstrecken.

5. Doppelschneckenextruder (100'; 100"; 200; 200') nach Anspruch 3 oder 4, **dadurch gekennzeichnet, dass** das Zwischenelement (30) mit dem axial benachbarten Wellenenden (10, 20; 210, 220) über Zylinderstifte (31) verbunden ist, die sich von Bohrungen (14; 34) in der Stirnseite (15, 25) des Wellenendes (10, 20; 210, 220) bis in Bohrungen (34) im Zwischenelement (30) erstrecken.

6. Doppelschneckenextruder (100'; 100"; 200; 200') nach Anspruch 5, **dadurch gekennzeichnet, dass** die Zylinderstifte (31) zur Verbindung des Zwischenelements (30) mit einem Wellenende (10, 20; 210, 220) und die Scherelemente (32; 32") auf einem gemeinsamen Teilkreis (13; 33) angeordnet sind.

7. Doppelschneckenextruder (100; 100'; 100"; 200; 200') nach wenigstens einem der vorhergehenden Ansprüche, **dadurch gekennzeichnet, dass** wenigstens zwei Zylinderstifte (31) und wenigstens zwei Scherelemente (32; 32") vorgesehen sind, die auf einem gemeinsamen Teilkreis (13; 33) in gleichmäßiger Winkelteilung angeordnet sind.

8. Doppelschneckenextruder (100') nach einem der vorhergehenden Ansprüche, **dadurch gekennzeichnet, dass** zwei Zwischenelemente (30) vorgesehen sind, von denen jedes mit einem Wellenende (10, 20) drehmomentensteif verbunden ist, und dass sich zumindest ein Teil der stiftförmigen Scherelemente (32') von Bohrungen (14) in der Stirnseite (15) einen Wellenendes (10) durch beide Zwischenelemente (30) hindurch bis in Bohrungen im jeweils anderen Wellenende (20) erstrecken.

9. Doppelschneckenextruder (200) nach einem der vorhergehenden Ansprüche, **dadurch gekennzeichnet,**
- **dass** wenigstens eines der Wellenenden (220) der Abtriebswellen und/oder wenigstens eines der Wellenenden (210) der Extruderschnecken jeweils eine Außenverzahnung (211, 221) aufweist;
- **dass** je verzahntem Wellenende (210, 220) eine Zwischenbuchse (240) vorgesehen ist, die eine auf die Außenverzahnung (211, 221) des Wellenendes (210, 220) aufsetzbare Innenverzahnung (241) aufweist und
- **dass** in der Stirnseite (245) der Zwischenbuchse (240) mehrere Bohrungen (244) für die Scherelemente (32; 32") eingebracht sind.

10. Doppelschneckenextruder (100) nach wenigstens einem der vorhergehenden Ansprüche, **dadurch gekennzeichnet, dass** die Wellenenden (10, 20) mit ihren Stirnseiten (15, 25) direkt voreinander liegen und über die in die Bohrungen (14, 34) eingesetzten Scherelemente (31, 32), die die Trennebene (T) zwischen den Wellenenden (10, 20) überbrücken, gekoppelt sind.

11. Doppelschneckenextruder (100'; 100"; 200; 200') nach wenigstens einem der vorhergehenden Ansprüche, **dadurch gekennzeichnet, dass** der Durchmesser D_{T} des Teilkreises (13) der Bohrungen (14) dem 0,5fachen bis 0,9fachen Außendurchmesser D_{w} entspricht.

12. Doppelschneckenextruder (100'; 100"; 200; 200') nach wenigstens einem der vorhergehenden Ansprüche, **dadurch gekennzeichnet, dass** die Mittelachsen der Extruderschneckenwellen (10; 210) parallel zueinander ausgerichtet sind und dass der Außendurchmesser D_{w} der Wellenenden (10, 20; 210, 220) dem 0,8fachen bis 1,0fachen Achsabstand A entspricht.

13. Doppelschneckenextruder (100'; 100"; 200; 200') nach wenigstens einem der vorhergehenden Ansprüche, **dadurch gekennzeichnet, dass** die Extruderschneckenwellen (10; 210) konisch ausgebildet sind und die Mittelachsen der Extruderschneckenwellen (10; 210) in einem Winkel von größer 0° zueinander ausgerichtet sind

14. Doppelschneckenextruder (100'; 100"; 200; 200') nach wenigstens einem der vorhergehenden Ansprüche, **dadurch gekennzeichnet, dass** die Scherelemente (32; 32") über Formschlussmittel axial in wenigstens einem der Wellenenden (10, 20; 210, 220) festlegbar sind.

15. Doppelschneckenextruder (100'; 100"; 200; 200') nach Anspruch 13, **dadurch gekennzeichnet, dass** die Scherelemente (32; 32") jeweils wenigstens eine Nut, eine Vertiefung oder einen Einstich aufweisen, in die wenigstens ein von der Außenseite des Wellenendes eingebrachtes Sicherungselement eingreift.

## Claims

1. Twin screw extruder (100; 100'; 100"; 200; 200') with integrated safety couplings, at least comprising a pair of extruder screw shafts each having a drive-side shaft end (10; 210), and a transmission with two output shafts each having a shaft end (20; 220),
wherein in each case an extruder screw shaft and drive shaft are arranged in alignment on a common centre axis;
**characterized**
- **in that** the pair of shaft ends (10; 210) of the extruder screw shafts and/or the pair of shaft ends (20; 220) of the transmission are/is cylindrically formed;
- **in that** a plurality of bores (14; 24), which are parallel to the centre axis, for at least two shear elements (32; 32") are provided on the end sides (15) of at least one pair of shafts ends (10, 20, 210, 220), and
- the shafts ends (10, 20) are coupled to one another in a torsionally stiff manner via the shear elements (32; 32") which are inserted into the bores (14; 24) and which bridge a parting plane (T; T₁; T₂) formed at least between the shaft ends (10, 210) of the extruder screw shafts and the shaft ends (20, 220) of the transmission.

2. Twin screw extruder (100; 100'; 100"; 200; 200') according to Claim 1, **characterized in that** the shear pin elements (32; 32'; 32") are formed as cylindrical pins.

3. Twin screw extruder (100'; 100"; 200; 200') according to Claim 2, **characterized**
- **in that** in each case at least one intermediate element (30) is inserted between the shaft ends (10, 20; 210, 220) of the extruder screws and the drive shafts and has an outside diameter which is not larger than the axial spacing (A) between the output shaft ends (20; 220);
- **in that** the intermediate element (30) is connected to one of the axially adjacent shaft ends (10, 20; 210, 220) in a torsionally stiff manner over a first parting plane T₁,
- **in that** the cylindrical pin-shaped shear elements (32; 32"), starting from the at least one inserted intermediate element (30), bridge at least one parting plane T₂ in relation to the other shaft end (10, 20; 210, 220), and
- **in that** the torque which can be transmitted in the parting plane T₂ is less than the torque which can be transmitted in the parting plane T₁.

4. Twin screw extruder (100') according to Claim 3, **characterized**
- **in that** the shaft ends (10, 20; 210, 220) and the intermediate element (30) each have at least two congruent bores (14; 24; 34), and
- **in that** at least some of the shear elements (32') extend from bores (14; 24) in the end side (15; 25) of the one shaft end (10, 20) through bores (34) in the intermediate element (30) into bores (14; 24) in the respective other shaft end (10, 20) or in at least one further intermediate element (30), which is connected thereto, or in an adapter element (240).

5. Twin screw extruder (100'; 100"; 200; 200') according to Claim 3 or 4, **characterized in that** the intermediate element (30) is connected to the axially adjacent shaft ends (10, 20; 210, 220) via cylindrical pins (31) which extend from bores (14; 34) in the end side (15, 25) of the shaft end (10, 20; 210, 220) into bores (34) in the intermediate element (30).

6. Twin screw extruder (100'; 100"; 200; 200') according to Claim 5, **characterized in that** the cylindrical pins (31) for connecting the intermediate element (30) to a shaft end (10, 20; 210, 220) and the shear elements (32; 32") are arranged on a common pitch circle (13; 33).

7. Twin screw extruder (100; 100'; 100"; 200; 200') according to at least one of the preceding claims, **characterized in that** at least two cylindrical pins (31) and at least two shear elements (32; 32") are provided which are arranged on a common pitch circle (13; 33) with a uniform angular division.

8. Twin screw extruder (100') according to one of the preceding claims, **characterized in that** two intermediate elements (30) are provided, of which each is connected to a shaft end (10, 20) in a torsionally stiff manner, and **in that** at least some of the pin-shaped shear elements (32') extend from bores (14) in the end side (15) of a shaft end (10) through both intermediate elements (30) into bores in the respective other shaft end (20).

9. Twin screw extruder (200) according to one of the preceding claims, **characterized**
- **in that** at least one of the shaft ends (220) of the output shafts and/or at least one of the shaft ends (210) of the extruder screws each have an external toothing (211, 221);
- **in that**, for each toothed shaft end (210, 220), an intermediate bush (240) is provided which has an internal toothing (241) which can be placed on the external toothing (211, 221) of the shaft end (210, 220), and
- **in that** a plurality of bores (244) for the shear elements (32; 32") are incorporated in the end side (245) of the intermediate bush (240).

10. Twin screw extruder (100) according to at least one of the preceding claims, **characterized in that** the shaft ends (10, 20) lie directly in front of one another with their end sides (15, 25) and are coupled via the shear elements (31, 32) which are inserted into the bores (14, 34) and which bridge the parting plane (T) between the shafts ends (10, 20) .

11. Twin screw extruder (100'; 100"; 200; 200') according to at least one of the preceding claims, **characterized in that** the diameter D_{T} of the pitch circle (13) of the bores (14) corresponds to 0.5 times to 0.9 times the outside diameter D_{w}.

12. Twin screw extruder (100'; 100"; 200; 200') according to at least one of the preceding claims, **characterized in that** the centre axes of the extruder screw shafts (10; 210) are oriented parallel to one another, and **in that** the outside diameter D_{w} of the shaft ends (10, 20; 210, 220) corresponds to 0.8 times to 1.0 times the axial distance A.

13. Twin screw extruder (100'; 100"; 200; 200') according to at least one of the preceding claims, **characterized in that** the extruder screw shafts (10; 210) are conically formed and the centre axes of the extruder screw shafts (10; 210) are oriented at an angle of more than 0° to one another.

14. Twin screw extruder (100'; 100"; 200; 200') according to at least one of the preceding claims, **characterized in that** the shear elements (32; 32") can be fixed axially in at least one of the shaft ends (10, 20; 210, 220) via form-fitting means.

15. Twin screw extruder (100'; 100"; 200; 200') according to Claim 13, **characterized in that** the shear elements (32; 32") each have at least one groove, a depression or an incision in which there engages at least one securing element introduced from the outer side of the shaft end.

## Revendications

1. Extrudeuse à double vis (100 ; 100' ; 100" ; 200 ; 200') pourvue d'accouplements de sécurité intégrés, comportant au moins une paire d'arbres de vis d'extrudeuse dotés respectivement d'une extrémité d'arbre (10 ; 210) côté entraînement, et une transmission dotée de deux arbres de sortie dotés respectivement d'une extrémité d'arbre (20 ; 220),
un arbre de vis d'extrudeuse et un arbre d'entraînement étant disposés respectivement de manière alignée sur un axe médian commun ;
**caractérisée**
- **en ce que** la paire d'extrémités (10 ; 210) des arbres de vis d'extrudeuse et/ou la paire d'extrémités d'arbres (20 ; 220) de la transmission est/sont réalisée(s) de manière cylindrique ;
- **en ce que** plusieurs alésages (14 ; 24) parallèles à l'axe médian pour au moins deux éléments de cisaillement (32 ; 32") sont prévus sur les côtés frontaux (15) d'au moins une paire d'extrémités d'arbres (10, 20, 210, 220), et
- les extrémités d'arbres (10, 20) sont accouplées les unes aux autres de manière résistante aux couples par le biais des éléments de cisaillement (32 ; 32") insérés dans les alésages (14 ; 24), lesquels éléments de cisaillement enjambent au moins le plan de séparation (T ; T1 ; T2) réalisé entre les extrémités (10, 210) des arbres de vis d'extrudeuse et les extrémités d'arbres (20, 220) de la transmission.

2. Extrudeuse à double vis (100 ; 100' ; 100" ; 200 ; 200') selon la revendication 1, **caractérisée en ce que** les éléments formant goupilles de cisaillement (32 ; 32' ; 32") sont réalisés sous forme de goupilles cylindriques.

3. Extrudeuse à double vis (100' ; 100" ; 200 ; 200') selon la revendication 2, **caractérisée**
- **en ce qu'**au moins un élément intermédiaire (30) est introduit respectivement entre les extrémités d'arbres (10, 20 ; 210, 220) des vis d'extrudeuse et les arbres d'entraînement, élément intermédiaire dont le diamètre extérieur n'est pas supérieur à l'entraxe A entre les extrémités d'arbres de sortie (20 ; 220) ;
- **en ce que** l'élément intermédiaire (30) est relié de manière résistante aux couples à l'une des extrémités d'arbres (10, 20 ; 210, 220) axialement adjacentes par le biais d'un premier plan de séparation T₁,
- **en ce que** les éléments de cisaillement (32 ; 32") en forme de goupilles cylindriques enjambent au moins un plan de séparation T₂ par rapport à l'autre extrémité d'arbre (10, 20 ; 210, 220) à partir de l'au moins un élément intermédiaire (30) introduit, et
- **en ce que** le couple pouvant être transmis dans le plan de séparation T₂ est inférieur au couple pouvant être transmis dans le plan de séparation T₁.

4. Extrudeuse à double vis (100') selon la revendication 3, **caractérisée**
- **en ce que** les extrémités d'arbres (10, 20 ; 210, 220) et l'élément intermédiaire (30) comprennent respectivement au moins deux alésages (14 ; 24 ; 34) en coïncidence et
- **en ce qu'**au moins une partie des éléments de cisaillement (32') s'étendent à partir d'alésages (14 ; 24) dans le côté frontal (15 ; 25) de l'une des extrémités d'arbres (10, 20) à travers des alésages (34) dans l'élément intermédiaire (30) jusque dans des alésages (14 ; 24) dans l'autre extrémité d'arbre (10, 20) respectivement ou dans au moins un autre élément intermédiaire (30) relié à celle-ci ou un élément adaptateur (240).

5. Extrudeuse à double vis (100' ; 100" ; 200 ; 200') selon la revendication 3 ou 4, **caractérisée en ce que** l'élément intermédiaire (30) est relié aux extrémités d'arbres (10, 20 ; 210, 220) axialement adjacentes par le biais de goupilles cylindriques (31) qui s'étendent à partir d'alésages (14 ; 34) dans le côté frontal (15, 25) de l'extrémité d'arbre (10, 20 ; 210, 220) jusque dans des alésages (34) dans l'élément intermédiaire (30).

6. Extrudeuse à double vis (100' ; 100" ; 200 ; 200') selon la revendication 5, **caractérisée en ce que** les goupilles cylindriques (31) servent à la liaison de l'élément intermédiaire (30) à une extrémité d'arbre (10, 20 ; 210, 220) et les éléments de cisaillement (32 ; 32") sont disposés sur un cercle primitif (13 ; 33) commun.

7. Extrudeuse à double vis (100 ; 100' ; 100" ; 200 ; 200') selon au moins l'une des revendications précédentes, **caractérisée en ce qu'**au moins deux goupilles cylindriques (31) et au moins deux éléments de cisaillement (32 ; 32") sont prévus, lesquels sont disposés suivant un pas angulaire uniforme sur un cercle primitif (13 ; 33) commun.

8. Extrudeuse à double vis (100') selon l'une des revendications précédentes, **caractérisée en ce que** deux éléments intermédiaires (30) sont prévus, parmi lesquels chacun est relié à une extrémité d'arbre (10, 20) de manière résistante aux couples, et **en ce qu'**au moins une partie des éléments de cisaillement (32') en forme de goupilles s'étendent à partir d'alésages (14) dans le côté frontal (15) d'une extrémité d'arbre (10) à travers les deux éléments intermédiaires (30) jusque dans des évidements dans l'autre extrémité d'arbre (20) respectivement.

9. Extrudeuse à double vis (200) selon l'une des revendications précédentes, **caractérisée**
- **en ce qu'**au moins l'une des extrémités (220) des arbres de sortie et/ou au moins l'une des extrémités d'arbres (210) des vis d'extrudeuse comprend/comprennent respectivement une denture extérieure (211, 221) ;
- **en ce qu'**une douille intermédiaire (240) est prévue pour chaque extrémité d'arbre dentée (210, 220), laquelle douille comprend une denture intérieure (241) pouvant être placée sur la denture extérieure (211, 221) de l'extrémité d'arbre (210, 220) et
- **en ce que** plusieurs évidements (244) pour les éléments de cisaillement (32 ; 32") sont introduits dans le côté frontal (245) de la douille intermédiaire (240).

10. Extrudeuse à double vis (100) selon au moins l'une des revendications précédentes, **caractérisée en ce que** les extrémités d'arbres (10, 20) sont situées directement l'une devant l'autre par leurs côtés frontaux (15, 25) et sont accouplées par le biais des éléments de cisaillement (31, 32) insérés dans les alésages (14, 34), lesquels éléments de cisaillement enjambent le plan de séparation (T) entre les extrémités d'arbres (10, 20).

11. Extrudeuse à double vis (100' ; 100" ; 200 ; 200') selon au moins l'une des revendications précédentes, **caractérisée en ce que** le diamètre D_{T} du cercle primitif (13) des alésages (14) correspond à 0,5 fois à 0,9 fois le diamètre extérieur D_{w}.

12. Extrudeuse à double vis (100' ; 100" ; 200 ; 200') selon au moins l'une des revendications précédentes, **caractérisée en ce que** les axes médians des arbres de vis d'extrudeuse (10 ; 210) sont orientés parallèlement l'un à l'autre et **en ce que** le diamètre extérieur D_{w} des extrémités d'arbre (10, 20 ; 210, 220) correspond à 0,8 fois à 1,0 fois l'entraxe A.

13. Extrudeuse à double vis (100' ; 100" ; 200 ; 200') selon au moins l'une des revendications précédentes, **caractérisée en ce que** les arbres de vis d'extrudeuse (10 ; 210) sont réalisés de manière conique et les axes médians des arbres de vis d'extrudeuse (10 ; 210) sont orientés l'un par rapport à l'autre suivant un angle supérieur à 0°.

14. Extrudeuse à double vis (100' ; 100" ; 200 ; 200') selon au moins l'une des revendications précédentes, **caractérisée en ce que** les éléments de cisaillement (32 ; 32") peuvent être fixés axialement dans au moins l'une des extrémités d'arbres (10, 20 ; 210, 220) par le biais de moyens d'engagement par complémentarité de forme.

15. Extrudeuse à double vis (100' ; 100" ; 200 ; 200') selon la revendication 13, **caractérisée en ce que** les éléments de cisaillement (32 ; 32") comprennent respectivement au moins une rainure, un évidement ou une entaille, dans lequel/laquelle vient en prise au moins un élément de sécurité introduit depuis le côté extérieur de l'extrémité d'arbre.
